# EUROPÄISCHE PATENTSCHRIFT

(11) **EP 2 361 854 B1**
(45) Veröffentlichungstag und Bekanntmachung des Hinweises auf die Patenterteilung: **09.10.2013**
(21) Anmeldenummer: 10172184.3
(22) Anmeldetag: 06.08.2010
(51) Int. Cl.: B65G 1/02

(54) **Regallager mit verschiebbaren Sicherheitstoren**
Racking facility with sliding safety doors
Rayonnage doté de panneaux de sécurité coulissants

(30) Priorität: 18.02.2010 DE 102010000469
(43) Veröffentlichungstag der Anmeldung: 31.08.2011
(73) Patentinhaber: Klug GmbH Integrierte Systeme, 92552 Teunz (DE)
(72) Erfinder: Klug, Johann, 92552, Teunz (DE)
(74) Vertreter: Söllner, Udo

(56) Entgegenhaltungen:
- EP-A1- 0 648 707
- EP-A2- 1 696 095
- AT-B- 410 934
- CH-A5- 696 687
- FR-A1- 2 351 032

## Beschreibung

Die vorliegende Erfindung betrifft ein Regallager mit einer Vielzahl von Lagerregalen, wobei zumindest einzelne Lagerregale ein Tor besitzen, das mittels eines in einer Lagergasse verfahrbaren Regalfahrzeugs mit einer Vorrichtung zum Öffnen und/oder Schließen des Tores unabhängig von einem benachbarten Tor betätigbar ist.

Ein solches Regallager wird häufig zur Lagerung und zum Speichern von Gütern unterschiedlicher Art verwendet, die häufig auf Paletten angeliefert und im Regallager gespeichert werden. Bei den Gütern kann es sich beispielsweise um in Kartons verpackte Produkte oder dergleichen handeln.

Im Regallager befinden sich daher Güter unterschiedlicher Art, die für den Abnehmer zu unterschiedlichen Sendungen zusammen gestellt werden. Zu diesem Zweck kann das Regallager einen Kommissioniergang oder eine Kommissioniergasse besitzen, in der sich ein Benutzer bewegen kann und aus den ihm zugänglichen Lagerregalen, bei denen es sich demgemäß um Palettenstellplätze handeln kann, die Güter entnimmt und zu der vom Abnehmer gewünschten Sendung zusammenstellt.

Wenn der Bestand an zu kommissionierenden Gütern im betreffenden Lagerregal auf Null abgesunken ist, wird die im Lagerregal verbliebene Palette vom Benutzer beispielsweise in den Kommissioniergang gezogen oder vom Regalbediengerät entfernt und es muss eine neue Palette mit Gütern in das Lagerregal befördert werden. Zu diesem Zweck sind in Lagergassen zwischen den Lagerregalen Regalfahrzeuge vorgesehen, die eine befüllte Palette aus einem anderen Regallagerplatz in das leer gewordene Lagerregal befördern oder einen Warenaustauch vornehmen.

Bei einem gattungsgemäßen Regallager handelt es sich oftmals um ein Hochregallager, in jedem Fall ist es erforderlich, dass es vermieden wird, dass ein sich in der Kommissioniergasse bewegender Benutzer einen offenen Zugang über das Lagerregal in die Lagergasse bekommt. Zu diesem Zweck ist das Lagerregal gegenüber der Lagergasse mit einem verfahrbaren Tor gesichert, welches zum Auffüllen des Lagerregals von dem Regalfahrzeug, bei dem es sich um ein automatisch betätigtes Regalbediengerät handeln kann, geöffnet werden muss, damit der Lagerplatz von der Lagergasse aus mit entsprechenden neuen Gütern beschickt werden kann.

Anhand der AT 410 934 B ist ein Hochregallager bekannt geworden, welches Lagerregale besitzt, die gegenüber der Lagergasse, in der das Regalbediengerät verfährt, mittels eines Tores verschlossen werden können. Zum Öffnen des Tors ist am Regalbediengerät ein Reibrad vorgesehen, mit dem das Tor auf einer im Winkel zur horizontal verlaufenden Schiene verlagert werden kann. Soll das Tor wieder geschlossen werden, so nimmt das Tor auf Grund der schräg verlaufenden Schiene und der Schwerkraft selbst wieder eine geschlossene Stellung ein.

Eine solche Konfiguration weist viele Nachteile auf. So kann der Kommissionierer oder Bediener das Tor, wenn er dies aus welchen Gründen auch immer beabsichtigt, selbst aufdrücken. Das geöffnete Tor fällt bei dem bekannten Hochregallager selbsttätig auf Grund der Schwerkraft in eine geschlossene Stellung zurück. Befindet sich in dem Augenblick, in dem das Tor in die geschlossene Stellung zurückfährt, der Benutzer im Bereich des Verfahrwegs der Tors, so kann dieser erheblich verletzt werden, da das Tor auf Grund seiner Gewichtskraft zurückfährt und nicht weiter gebremst wird.

Der bei dem bekannten Hochregallager gewählte Antrieb in der Form eines Reibrades ist sehr verschleißanfällig. Zudem ist die Reibkraft zwischen dem Reibrad und dem Tor kaum vorhersehbar einstellbar, da sich die Reibungsverhältnisse beispielsweise auf Grund sich verändernder Luftfeuchtigkeitswerte ebenfalls verändern werden können oder sich auch dann ändern, wenn durch längere Benutzung das Reibrad bereits Abriebspuren am Tor hinterlassen hat und sich die Reibkraft dadurch geändert hat.

Greift ein Kommissionierer während des Vorgangs des Öffnens dieses bekannten Hochregallagers in einen Spalt zwischen dem Tor und einem beispielsweise vorgesehenen Regalsteher, so besteht wieder erhebliche Verletzungsgefahr, da auch eine einmal eingestellte Reibkraft, die ein Verletzungsrisiko eigentlich ausschließen soll, nicht dauerhaft eingehalten werden kann. Zudem benötigt das bekannte Hochregallager auch einen hohen Platzbedarf und ist demgemäß teuer in der Ausgestaltung, da jedes Tor einen schräg verlaufenden Schienenabschnitt besitzen muss, der anderseits auch ein darüber angeordnetes Lagerregal nicht verstellen darf, so dass zwischen den einzelnen Lagerregalen entsprechende Abstände vorgesehen werden müssen, was auf Grund des erhöhten Platzbedarfs auch die Kosten des Gebäudes, welches das bekannte Hochregallager aufnimmt, deutlich erhöht.

Auch anhand der Druckschrift CH 696 687 A5 ist ein Regallager gemäß dem Oberbegriff des Anspruchs 1, mit einer Vielzahl von Lagerregalen bekannt geworden, wobei die Lagerregale mit - beispielsweise wiederum mittels eines Reibrades - verschiebbaren Toren versehen sind. Zusätzlich können die Tore gegen unbeabsichtigtes Öffnen verriegelt werden. Auf diese Weise wird verhindert, dass ein Kommissionierer ein Tor selbst aufdrücken kann. Es bestehen aber für den Kommissionierer immer noch erhebliche Verletzungsgefahren. Es ist zum Beispiel gefährlich, wenn er während des Vorgangs des Öffnens oder Schließens eines Tores in einen Spalt zwischen dem Tor und einem beispielsweise vorgesehenen Regalsteher greift, da die einmal eingestellte Reibkraft, nicht dauerhaft eingehalten werden kann. Zudem unterliegt dieses bekannte Regallager denselben Nachteilen hinsichtlich Verschleiß des Antriebs in Form eines Reibrades, die vorstehend bereits beschrieben worden sind.

Anhand der EP 1 696 095 B1 ist ein Regallager mit mehreren Palettenstellplätzen und einem Tor bekannt geworden, wobei das Tor mehrere Teilabschnitte aufweist und die Teilabschnitte lösbar miteinander gekoppelt und in einer gemeinsamen Schiene verschoben werden können. Bei diesem bekannten Regallager ist ein Klinken-/Bolzen-Mechanismus zwischen benachbarten Teilabschnitten des Tores vorgesehen, mit dem es erreicht wird, dass beispielsweise zwei oder drei Teilsegmente gemeinsam verschoben werden können. Eine Vorrichtung, mit der es vermieden werden kann, dass ein im Bereich des Verfahrwegs der Teilsegmente unbeabsichtigt stehender Kommissionierer durch das Verfahren der Teilsegmente nicht verletzt werden kann, ist aus dieser Druckschrift nicht ersichtlich.

Ausgehend hiervon liegt der vorliegenden Erfindung die Aufgabe zugrunde, ein Regallager zu schaffen, welches einen wesentlich weniger verschleißanfälligen Mechanismus zur Betätigung der Tore aufweist und bei dem ein unbeabsichtigtes Öffnen des Tores durch beispielsweise einen Benutzer vermieden werden kann und auch eine funktionsgerechte Sicherungseinrichtung zur Vermeidung eines Verletzungsrisikos des Benutzers vorgesehen ist.

Die Erfindung weist zur Lösung dieser Aufgabe die im Anspruch 1 angegebenen Merkmale. Vorteilhafte Ausgestaltung hiervon sind in den weiteren Ansprüchen beschrieben.

Die Erfindung schafft ein Regallager mit einer Vielzahl von Lagerregalen, wobei zumindest einzelne Lagerregale ein Tor besitzen, das mittels eines in einer Lagergasse verfahrbaren Regalfahrzeuges mit einer Vorrichtung zum Öffnen und/oder Schließen des Tores unabhängig von einem benachbarten Tor betätigbar ist, und die Vorrichtung zum Öffnen und Schließen des Tores mittels Reibkraft und zur Entriegelung eines gegen unbeabsichtigtes Öffnen verriegelten Tores ausgebildet ist, und die Vorrichtung eine Einrichtung mit einer Aufnahme sowie einen an der Aufnahme angeordneten elektrisch betätigbaren Magneten besitzt, der zur Ausbildung von Reibkraft zwischen dem Magneten und einem am Tor angeordneten ferromagnetischen Abschnitt ausgebildet ist und mittels eines Antriebsmotors relativ zum Tor und zum Öffnen und Schließen des Tores zusammen mit dem Tor verfahrbar ist und die Einrichtung zur Beaufschlagung einer am Tor vorgesehenen Verriegelungseinrichtung zur Entriegelung des Tores ausgebildet ist.

Damit wird es mit dem erfindungsgemäßen Regallager ermöglicht, dass über eine Einstellung der Reibkraft die beim Öffnen und Schließen des Tores von der Vorrichtung ausgeübte öffnungskraft und Schließkraft eingestellt werden kann, wodurch einerseits die Sicherheit der erfindungsgemäßen Regallager gegenüber bekannten Regallagem erhöht werden kann und andererseits dadurch, dass die Vorrichtung auch zur Entriegelung eines verriegelten Tores ausgebildet ist, auch erreicht wird, dass ein Benutzer das Tor nicht beispielsweise in unberechtigter Weise öffnen kann.

Die beim Öffnen und Schließen von der Vorrichtung erzeugte Kraft zur Betätigung des Tores kann auch unterschiedlich eingestellt werden, so kann beispielsweise zum Öffnen des Tores eine von der Vorrichtung auf das Tor ausgeübte Reibkraft eingestellt werden, die sich von der Schließkraft beim Schließen des Tores unterscheidet.

So kann beispielsweise auch erreicht werden, dass das Tor mit höherer Reibkraft geöffnet und damit auch mit höherer Geschwindigkeit geöffnet werden kann, wenn ein Eindringen des Benutzers in den Verfahrweg des Tores beispielsweise mittels anderer Sicherungselemente oder konstruktiver Maßnahmen ausgeschlossen werden kann, während eine solche Maßnahme bei der Schließbewegung des Tores nicht möglich ist und das Tor deshalb mit niedrigerer Schließkraft und niedrigerer Geschwindigkeit geschlossen wird.

Der an der Aufnahme der Vorrichtung angeordnete, elektrisch betätigbare Magnet, der mittels des Antriebsmotors relativ zum Tor und zum Öffnen und Schließen des Tores zusammen mit dem Tor verfahrbar ist, erlaubt außerdem über eine entsprechende Beeinflussung der elektromagnetischen Feldstärke des Magneten eine feinfühlige Einstellung der Reibkraft zum Öffnen und Schließen des Tores.

So kann beispielsweise eine zum Öffnen des Tores wirkende Normalkraft zwischen einer Kontaktfläche des Magneten und dem Tor anders eingestellt werden als eine entsprechende Normalkraft beim Schließen des Tores. Über eine entsprechende Verfahrbewegung des Magneten zusammen mit dem Regalbediengerät oder unabhängig vom Regalbediengerät kann das Tor geöffnet oder geschlossen werden. Kommt es beim Öffnen oder Schließen des Tores zu einer Kollision des Tores im Bereich des Verfahrwegs mit einem Fremdkörper oder beispielsweise einen versehentlich in den Verfahrweg greifenden Benutzer, so reicht die zwischen dem Tor und dem elektrisch betätigten Magneten wirkende Normalkraft nicht mehr aus, das Tor weiter zu verfahren, der Magnet rutscht ab, das Tor bleibt stehen und eine zum Betrieb des Regallagers vorgesehene Steuerung meldet einen Störungsfall, die Gefahr einer Verletzung eines Benutzers wurde wirksam vermieden.

Unabhängig davon, dass im Bereich des Öffnungsraums des Tores auch weitere Personenschutzeinrichtungen vorgesehen sein können, über die ein sofortiger Stillstand des Regalbediengeräts und/oder der Verfahrbewegung des Tores eingeleitet werden kann, wenn ein Benutzer in deren Erfassungsbereich gelangt, wird über die Steuerung der vom elektrisch betriebenen Magneten induzierten elektrischen Feld-stärke auch bei einem ausgesprochen unwahrscheinlichen Ausfall der Personenschutzeinrichtung erreicht, dass über beispielsweise eine Schließbewegung des Tores ein Fuß oder dergleichen des Kommissionierers im Verfahrweg des Tores nicht verletzt werden kann.

Nach der Erfindung ist eine Einrichtung vorgesehen, die zur Beaufschlagung einer am Tor vorgesehenen und zur Verriegelung des Tores ausgebildeten Verriegelungseinrichtung dient und zwar zur Entriegelung des verriegelten Tores. Befindet sich das Tor in seiner normalen, geschlossenen Stellung, so hat ein sich in der Kommissioniergasse bewegender Benutzer keinen Zugang zu der Lagergasse, in der das Regalbediengerät verfährt. Das Tor befindet sich in seiner durch die Verriegelungseinrichtung gesicherten geschlossenen Stellung. Die nach der Erfindung vorgesehene Einrichtung kann die Verriegelungseinrichtung so beaufschlagen, dass diese geöffnet wird und daraufhin das Tor von der Vorrichtung verfahren werden kann.

Mittels des Antriebsmotors kann die Einrichtung zur Entriegelung des Tores in den Bereich einer Verriegelungseinrichtung des Tores verfahren werden. Damit wird es erreicht, dass das beispielsweise vorgesehene Regalbediengerät mit einer vollständig befüllten Palette in den Öffnungsbereich des zu öffnenden Tores fährt, und unabhängig von einer weiteren Verfahrbewegung des Regalbediengeräts über den Antriebsmotor die Einrichtung zur Entriegelung des Tores in einen Bereich des Tores verfahren wird, an dem die Verriegelungseinrichtung des Tores vorgesehen ist, und auf diese Weise eine Verfahroperation am Regalbediengerät zum Entriegeln des Tores nicht mehr erforderlich ist.

Bei dem vorstehend erwähnten bekannten Hochregallager verfährt das geöffnete Tor auf Grund der Schwerkraftwirkung in die Schließstellung. Im Gegensatz hierzu ist es nach der vorliegenden Erfindung vorgesehen, dass das geöffnete Tor auch mittels Reibkraft aktiv geschlossen wird, auf diese Weise also auf die Schließkraft des Tores beim Schließvorgang Einfluss genommen werden kann. Am Tor ist eine selbsttätig verriegelnde Vorrichtung in der Form beispielsweise einer selbsttätig schließenden Falle vorgesehen, die nach einer Weiterbildung der Erfindung durch eine an der Vorrichtung vorgesehene Einrichtung beaufschlagt wird, so dass die Falle zwar selbsttätig verriegelnd ausgebildet ist, von der Einrichtung aber aktiv geöffnet werden muss.

Obwohl es nach der Erfindung vorgesehen ist, dass die Verriegelungseinrichtung selbsttätig verriegelnd ausgeführt ist, wenn sie von der Einrichtung zur Entriegelung losgelassen wird, sieht die Erfindung aber auch eine aktive Betätigung der Verriegelungseinrichtung zu deren Verriegelung vor, die Einrichtung kann also die Verriegelungseinrichtung nicht nur aktiv entriegeln, sondern auch aktiv verriegeln.

Damit wird erreicht, dass die für den Benutzer oder Kommissionierer nicht zugängliche Verriegelungseinrichtung für ein sicheres Geschlossenhalten des Tores sorgt, während die Verriegelungseinrichtung von der Lagergasse aus zugänglich ist und nur über die am Regalfahrzeug vorgesehene Vorrichtung geöffnet werden kann.

Zu diesem Zweck ist nach einer Weiterbildung der Erfindung eine mittels des Antriebsmotors verfahrbare Betätigungseinheit vorgesehen, mit der die Einrichtung mit der Verriegelungseinrichtung zu deren Entriegelung und/oder Verriegelung in Kontakt gebracht werden kann. Es heißt dies mit anderen Worten, dass der Antriebsmotor auch für eine von der Verfahrbewegung des Regalbediengeräts unabhängige Bewegung der Betätigungseinheit sorgt, die wiederum die Einrichtung mit der Verriegelungseinrichtung zu deren Betätigung in Kontakt bringt.

Bei der Verriegelungseinrichtung kann es sich um eine selbsttätig verriegelnde Falle handeln, die beispielsweise einen Sperrriegel, eine Sperrklinke oder einen Verriegelungsbolzen aufweist, der in eine an einer Führungsschiene zur Aufnahme und Führung des Tores vorgesehene Nut selbsttätig einrastet. Zur Entriegelung dieses Sperrmechanismus ist es erforderlich, den Sperrmechanismus aus seinem Eingriff mit der Nut zu lösen. Zu diesem Zweck ist es nach der Erfindung vorgesehen, dass die Betätigungseinheit die Einrichtung zur Entriegelung des Tores mit der Verriegelungseinrichtung in Kontakt bringt und eine weitere Verfahrbewegung der Einrichtung dann dafür sorgt, dass die Verriegelungseinrichtung ihre Eingriffsstellung mit der Nut löst.

Es bedeutet dies mit anderen Worten, dass die Entriegelungseinrichtung mittels des Antriebsmotors in den Erfassungsbereich des Verriegelungsmechanismus gefahren werden kann, unabhängig von einer weiteren Fahrbewegung des Regalbediengeräts und sodann die Einrichtung über die Betätigungseinheit mit der Verriegelungseinrichtung in Kontakt gebracht werden kann, beispielsweise die Sperrklinke aus ihrer Eingriffsstellung in der Nut der Verfahrschiene herausgedrückt werden kann, ebenfalls wieder ohne eine weitere Verfahrbewegung des Regalbediengerätes.

Nach einer Weiterbildung der Erfindung ist es vorgesehen, dass die Einrichtung mindestens einen Betätigungszylinder aufweist, der die Verriegelungseinrichtung in eine entriegelte Stellung betätigt und der Betätigungszylinder mittels des Antriebsmotors relativ zur Verriegelungseinrichtung verfahrbar ist. Der Betätigungszylinder kann beispielsweise elektrisch, hydraulisch, pneumatisch oder mittels einer anderen Antriebsenergie betätigt werden und die Verriegelungseinrichtung entsprechend entriegeln.

Der Betätigungszylinder kann dabei zusammen mit dem Elektromagneten an einer gemeinsamen Aufnahme angeordnet sein, die mittels der Betätigungseinheit in Richtung zu der Verriegelungseinrichtung bewegt werden kann.

In ähnlicher Weise ist es nach der Erfindung auch vorgesehen, dass die Einrichtung mindestens einen Betätigungszylinder aufweist, der die Verriegelungseinrichtung in eine verriegelte Stellung aktiv betätigt und dabei die Stellung der Verriegelungseinrichtung sensorisch überprüfbar ist. Auch dieser Betätigungszylinder kann an der vorstehend beschriebenen Aufnahme angeordnet sein, um zusammen mit dem Elektromagneten in Richtung zu der Verriegelungseinrichtung hin verfahren werden zu können. Die sensorische Überprüfung stellt eine weitere Erhöhung der Sicherheit für den Benutzer des erfindungsgemäßen Regallagers dar. Damit kann beispielsweise verifiziert werden, ob der für die Verriegelung des Tores benutzte Betätigungszylinder für eine entsprechende Eingriffsstellung der Verriegelungseinrichtung in der Nut einer Führungsschiene für das Tor gesorgt hat. Zu diesem Zweck kann auch am Betätigungszylinder eine Rückmeldeeinrichtung vorgesehen sein, deren Signal dann, wenn die Verriegelungseinrichtung eine Eingriffsstellung mit der Nut eingenommen hat, mittels der sensorischen Überprüfung der Verriegelungseinrichtung verifiziert werden kann. Bei einer solchen Vorgehensweise wird erst dann von einem bestimmungsgemäßen Betrieb des Regallagers ausgegangen, wenn die Verifizierung erfolgreich war.

Zu diesem Zweck ist es nach einer Weiterbildung der Erfindung vorgesehen, dass die Verriegelungseinrichtung relativ zum Tor weitgehend vertikal verlagerbar angeordnet ist und einen Sperrriegel aufweist, der mit einer beispielsweise optisch detektierbaren Sensorfläche versehen ist.

Findet über den vorstehend erwähnten Elektromagneten eine Verlagerungsbewegung des Tores statt und gelangt die in einer geöffneten Stellung gehaltene Verriegelungseinrichtung in den Bereich einer zum Eingriff mit der Verriegelungseinrichtung vorgesehenen Nut in der Führungsschiene des Tores, so wird der Betätigungszylinder für das Entriegeln der Verriegelungseinrichtung drucklos geschalten, so dass die Verriegelungseinrichtung bereits in die Nut eingreifen kann.

Nach einer Variante hierzu kann die Verriegelungseinrichtung vom Elektromagneten in der entriegelten Stellung gehalten werden und der Betätigungszylinder bereits nach seiner Entriegelungsoperation drucklos geschalten werden. Dies hat den Vorteil, dass bei einem unwahrscheinlichen Ausfall des Elektromagneten die Verriegelungseinrichtung wieder selbsttätig verriegelt, da sie über die Schwerkraft wieder in die Nut fällt.

Neben der selbsttätigen Verriegelung durch die Verriegelungseinrichtung wird zusätzlich oder optional der Betätigungszylinder für das Verriegeln der Verriegelungseinrichtung aktiviert und beaufschlagt die Verriegelungseinrichtung so, dass diese aktiv in die Nut gedrückt wird und mittels der am Betätigungszylinder vorgesehenen Rückmeldeeinrichtung ein Signal ausgegeben wird, welches bestätigt, dass der Betätigungszylinder seine einer Schließstellung der Verriegelungseinrichtung entsprechende Verfahrposition eingenommen hat. Über die an der Verriegelungseinrichtung vorgesehene optisch detektierbare Sensorfläche wird zumindest in der geschlossenen Position des Tores verifiziert, dass die Verriegelungseinrichtung tatsächlich ihre Verriegelungsstellung eingenommen hat und im Fehlerfall, das heißt also bei divergierenden Signalen der Rückmeldeeinrichtung und der Detektion der Sensorfläche eine Fehlermeldung ausgegeben und weitere Verfahroperationen am Regalbediengerät werden eingestellt, bis der Fehlerfall behoben wurde.

Es kann nach einer Weiterbildung der Erfindung auch vorgesehen sein, dass die Verriegelungseinrichtung einen Sperrriegel besitzt, der eine Einbuchtung aufweist, die mit einer Fläche einer Ausnehmung der Nut an der Führungsschiene des Tores zusammen wirkt derart, dass ein unbeabsichtigtes Lösen des Sperrriegels von der Ausnehmung vermieden wird.

Bei einem solchen unbeabsichtigten Lösen des Sperrriegels kann es sich beispielsweise um ein zufälliges Herauswandern des Sperrriegels aus der Nut handeln, was durch den Kontakt zwischen der Einbuchtung und der Fläche der Ausnehmung vermieden wird, da sich diese in einer Verriegelungsstellung befinden. Ein zufälliges Lösen dieser Verriegelungsstellung würde zunächst eine zufällige geringfügige Verschiebung des Tores um einen sehr kurzen vorbestimmten Abstand erfordern, damit die Einbuchtung ihre Eingriffsstellung mit der Ausnehmung löst und erst dann das Herauswandern des Sperrriegels aus der Nut der Führungsschiene ermöglicht wäre. Dieses zufällige Lösen des Sperrriegels wird daher durch das Zusammenwirken aus Einbuchtung und Fläche der Ausnehmung verhindert.

Ein unbeabsichtigtes Lösen des Sperrriegels aus der Nut würde daher zunächst auch eine unbeabsichtigte Bewegung des Tores um den genannten vorbestimmten Abstand erfordern, ein kumulatives Auftreten beider unbeabsichtigter Ereignisse ist äußerst unwahrscheinlich, so dass die Sicherheit für den Benutzer damit weiter ansteigt.

Vorstehend wurde ausgeführt, dass die mit einer Betätigungseinheit verfahrbare Aufnahme den oder die Betätigungszylinder trägt und auch der Elektromagnet an der Aufnahme angeordnet ist. Um die genannten Bauteile mit Antriebsenergie zu versorgen, sind elektrische und fluidführende Leitungen notwendig, die bei der Betätigung der Betätigungseinheit ausgefahren beziehungsweise zurückgezogen werden. Zu diesem Zweck ist nach einer Weiterbildung der Erfindung eine Leitungsführungseinrichtung vorgesehen, an der die vorstehend genannten Leitungen angeordnet sind und über die sie auch geführt werden. Bei der Leitungsführungseinrichtung kann es sich beispielsweise um eine Energieführungskette handeln.

Die Betätigungseinheit fährt den Betätigungszylinder und den Elektromagneten relativ zum Tor beziehungsweise der Verriegelungseinrichtung aus und wieder ein. Die Betätigungseinheit ist ihrerseits nach einer Weiterbildung der Erfindung an einer mittels des Elektromotors relativ zum Regalfahrzeug verlagerbaren Aufnahme angeordnet und kann mittels eines Riemenbetriebs relativ zum Regalfahrzeug verlagert werden.

Soll das Tor verlagert werden, so bewegt die Betätigungseinheit den Elektromagneten und den Betätigungszylinder relativ zum Tor hin, bis der Betätigungszylinder in den Erfassungsbereich der Verriegelungseinrichtung gelangt und diese betätigt, also beispielsweise entriegelt. Der Elektromagnet wird bestromt und legt an dem Tor beziehungsweise an einem ferromagnetischen Abschnitt des Tores an und die vom Antriebsmotor induzierte Verfahrbewegung führt zu einer Verlagerung des Tores in Richtung zur geöffneten oder geschlossenen Stellung hin. Der Elektromagnet bleibt also während der Verfahrbewegung des Tores an diesem angeordnet und sorgt für die Bewegung des Tores zusammen mit dem Antriebsmotor. Die Verfahrbewegung des Tores kann selbstverständlich auch durch eine Verfahrbewegung des Regalfahrzeug bei stillstehendem Antriebsmotor bewerkstelligt werden.

Die Verriegelungseinrichtung beziehungsweise die in der Führungsschiene ausgebildete Nut ist von der Kommissioniergasse aus nicht zugänglich, so dass ein Aufheben dieser Sicherheitseinrichtung durch den Benutzer nicht möglich ist.

Die Aufnahme mit der Betätigungseinheit ist relativ zum Regalfahrzeug verlagerbar angeordnet und kann mittels des Riemenbetriebs relativ zum Regalfahrzeug bewegt werden. Die elektrische Antriebsmotor treibt also einen Riementrieb an, der beispielsweise einem Zahnriemen aufweist. Dieser, an einer Riemenscheibe verlaufende Zahnriemen ist mit der Aufnahme verbunden, die die Betätigungseinheit und im weiteren den Betätigungszylinder und den Elektromagneten trägt.

Bei dem erfindungsgemäß vorgesehenen Regallager sind die Tore in zwei beabstandet den und parallel zueinander laufenden Führungsschienen angeordnet. Wird in den Elektromagneten ein Bezugssystem gesetzt, so weist alternierend ein mittleres Tor mischen einem linken Tor und einem rechten Tor einen größeren Lichtenabstand zum Elektromagneten auf als das linke und rechte Tor.

Wird das mittlere Tor demnach über den Elektromagneten verfahren, also beispielsweise vollständig geöffnet, so würde es vor einem vollständigen Öffnen des mittleren Tores zu einer Kollision zwischen dem Elektromagneten und dem linken Tor kommen. Um diesen Umstand gerecht zu werden, ist es nach einer Weiterbildung der Erfindung vorgesehen, dass das Tor an seinem einer Führungsschiene zugewandten Bereich mit einer Ausnehmung zur Aufnahme der Verriegelungseinrichtung versehen ist derart, dass die Verriegelungseinrichtung bei einem vor dem Tor im Abstand dazu verlagerten anderen Tor in der Ausnehmung aufgenommen ist.

Die Erfindung wird im Folgenden anhand der Zeichnung näher erläutert. Diese zeigt in:
Fig. 1 eine Ansicht von vorne auf ein Regallager gemäß einer Ausführungsform nach der vorliegenden Erfindung;
Fig. 2 eine vergrößerte Darstellung eines Ausschnitts des Bereichs A mit einem Regalbediengerät und zwei seitlich davon angeordneten Lagerregalen;
Fig. 3 eine perspektivische Darstellung einer Vorrichtung zum Öffnung und Schlie-βen eines Tores, die am Regalbediengerät angebracht werden kann;
Fig. 4 eine perspektivische Darstellung von Betätigungseinrichtungen der erfindungsgemäßen Vorrichtung, die bereits zu einem zu öffnenden Tor hin verfahren worden sind;
Fig. 5 eine Darstellung ähnlich derjenigen nach Fig. 4, die eine Stellung der Betätigungseinrichtungen zeigt, wenn die Verriegelungseinrichtung gerade aus ihrem Eingriff mit einer in einer Führungsschiene für das Tor ausgebildeten Nut gelöst worden ist;
Fig. 6 eine Darstellung ähnlich derjenigen nach Fig. 5, die die Betätigungseinrichtungen im geöffneten Zustand der Verriegelungseinrichtung an einem mittleren, in Richtung nach hinten versetzten Tor nach Fig. 12 zeigt;
Fig. 7 eine perspektivische Darstellung der Vorrichtung in einer Ansicht von einem elektrischen Antriebsmotor aus betrachtet;
Fig. 8 eine perspektivische Ansicht ähnlich derjenigen nach Fig. 7, die die Betätigungseinrichtungen in einer in Richtung zu einem Tor hin verfahrenen Stellung zeigt;
Fig. 9 eine perspektivische Ansicht von unten auf eine Betätigungseinheit in der Form eines pneumatischen Arbeitskolbens;
Fig. 10 eine perspektivische Ansicht auf eine Verriegelungseinrichtung in der Form einer Verriegelungsplatte;
Fig. 11 eine Längsschnittdarstellung der Verriegelungsplatte nach Fig. 10; und
Fig. 12 eine perspektivische Ansicht auf drei Tore eines Lagerregals.

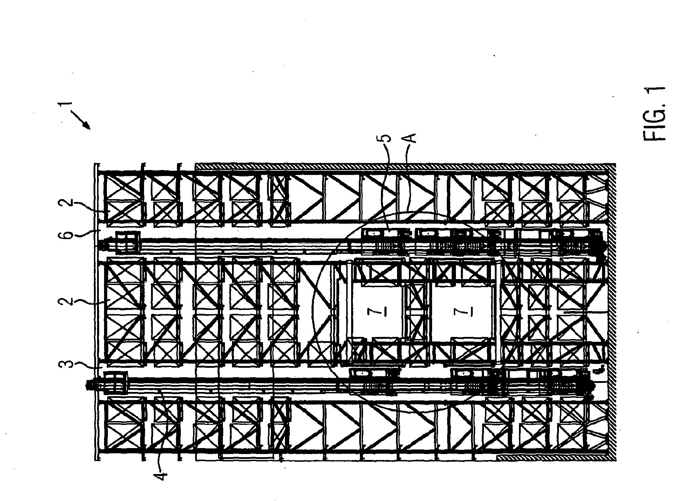

Fig. 1 der Zeichnung zeigt eine Ansicht auf ein Regallager 1 gemäß einer Ausführungsform der vorliegenden Erfindung.

Das Regallager 1 weist bei der dargestellten Ausführungsform dreizehn Ebenen mit einer Vielzahl von Lagerregalen 2 auf. Bei der vorliegenden Ausführungsform besitzt das Lagerregal 1 von der linken Seite aus betrachtet zwei nebeneinander liegende Lagerregale, die in dreizehn Ebenen übereinander angeordnet sind und in der Zeichnungsebene in Richtung nach hinten in mehreren Reihen hintereinander angeordnet sind.

Es folgt dann eine Lagergasse 3, in der ein Regalbediengerätemast 4 angeordnet ist, an dem ein in mehreren vertikalen Höhen angeordnet dargestellter Hubschlitten 5 vertikale Fahrbewegungen ausführen können. Ein zweite Lagergasse 6 mit einem Hubschlitten 5 schließt einen Bereich zwischen den beiden Regalgassen mit Lagerregalen ein, in dem zwei Kommissioniergänge 7 vorgesehen sind, in denen sich also Kommissionierer oder Bediener zum Sammeln und Zusammenstellen von für die Abnehmer vorgesehenen Sendungen von Gütern bewegen können.

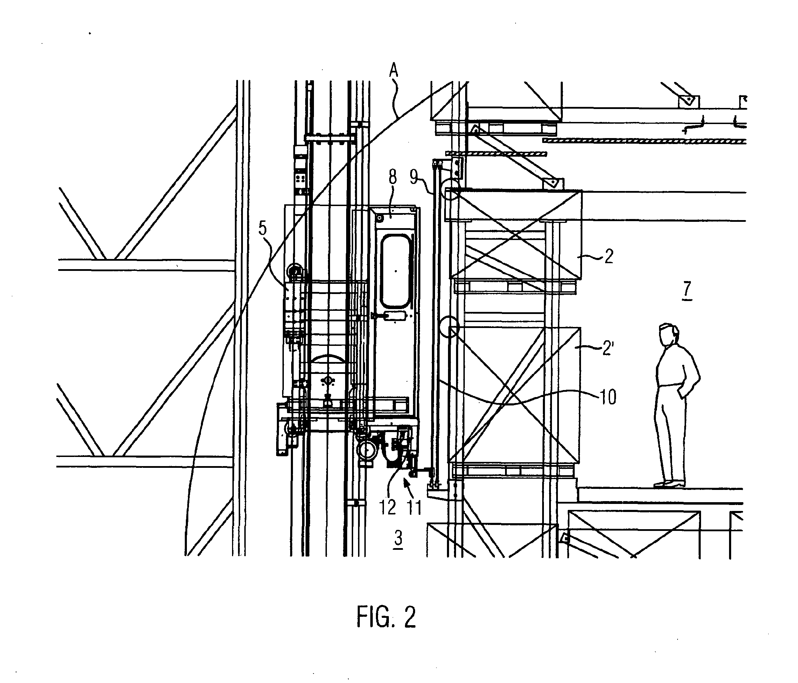

Fig. 2 der Zeichnung zeigt eine vergrößerte Darstellung des in Fig. 1 im eingeschlossenen Bereich A ersichtlichen linken oberen Regalfahrzeugs 5 in der Form eines Hubschlittens, bei dem es sich um eine Funktionseinheit eines automatisch betriebenes Regalbediengeräts handelt. Rechts davon ist der Kommissioniergang 7 ersichtlich, zwischen dem Regalbediengerät 8 und dem Kommissioniergang 7 sind zwei, unterschiedliche Höhe aufweisende Lagerregale 2, 2' vorgesehen, die zu kommissionierende Güter beinhalten.

Wenn sich der Bestand an Gütern in beispielsweise dem unteren Lagerregal 2' zu Ende neigt, wird vom Regalbediengerät 8 eine im Regallager 1 gelagerte gefüllte Palette herantransportiert, die in das dann leere Lagerregal 2' befördert wird.

Zu diesem Zweck muss ein das Lagerregal 2 beziehungsweise 2' gegen die Lagergasse 3 absicherndes Tor 9 geöffnet werden, welches dafür vorgesehen ist, dass ein sich im Kommissioniergang 7 aufhaltender Benutzer nicht in den Bereich der Lagergasse 3 gelangen kann.

Das in Fig. 2 ersichtliche Tor 10 ist vom Kommissioniergang 7 aus betrachtet näher zum Kommissioniergang angeordnet und sichert ein weiteres Lagerregal 2' ab, welches bei der dargestellten Ausführungsform in der Zeichnungsebene vor dem Lagerregal 2' liegt. Um also das dann leere Lagerregal 2' wieder befüllen zu können, muss das Tor 9 geöffnet werden, um eine volle Palette mit Gütern an den Stellplatz des Lagerregals 2' befördern zu können.

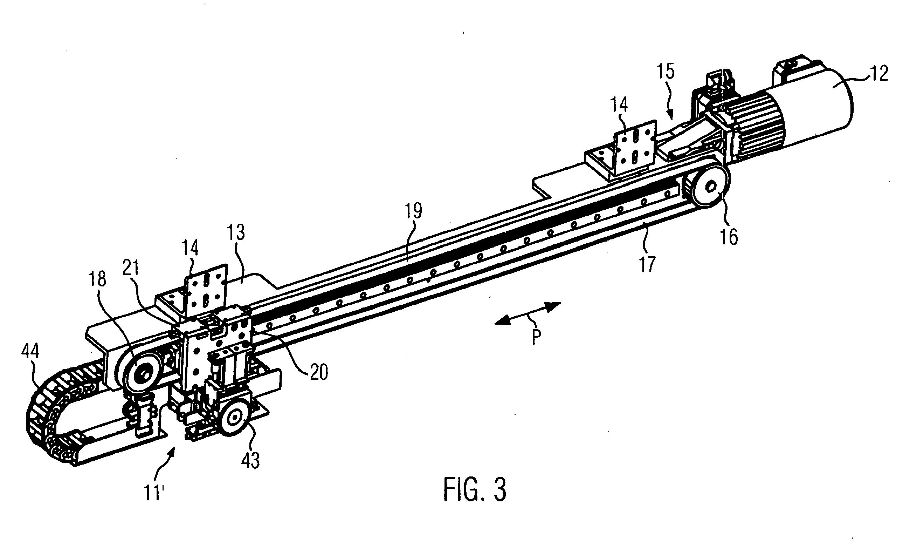

Zu diesem Zweck ist am Regalbediengerät 8 eine Vorrichtung 11 zum Öffnen und Schließen der Tore 9, 10 vorgesehen, die in Fig. 3 der Zeichnung perspektivisch und vergrößert dargestellt ist. Diese besitzt eine Einrichtung 11' zur Entriegelung einer Verriegelungseinrichtung 26 des Tores 9, 10.

Fig. 2 der Zeichnung zeigt einen Antriebsmotor 12 der Vorrichtung 11 in vertikaler Ausrichtung, Fig. 3 der Zeichnung zeigt diesen Antriebsmotor in einer horizontalen Ausrichtung, wodurch deutlich gemacht werden soll, dass in Abhängigkeit vom zur Verfügung stehenden Aufnahmeraum am Regalbediengerät 8 beide Varianten möglich und von der Erfindung mit umfasst sind.

Neben dem Antriebsmotor 12 weist die Vorrichtung 11 einen Träger 13 mit Aufnahmen 14 auf, an denen die Vorrichtung 11 an dem in Fig. 2 dargestellten Regalbediengerät 8 im Bereich der Unterseite des Hubschlittens 5 festgelegt werden kann.

Der elektrische Antriebsmotor 12, bei dem es sich um einen Drehstom-Asynchronmotor handeln kann, treibt über einen Winkelgetriebe 15 eine Zahnriemenscheibe 16 an. Diese Zahnriemenscheibe 16 dient dem Antrieb eines Zahnriemens 17, der zwischen der Zahnriemenscheibe 16 und einer weiteren, am gegenüberliegenden Ende des Trägers 13 angeordneten Zahnriemenscheibe 18 läuft.

Bei der dargestellten Ausführungsform ist am Zahnriemen 17 am oberen Zugtrumm 19 eine Aufnahme 20 lösbar festgelegt, so dass eine Bewegung des Zahnriemens 17 dazu führt, dass die Aufnahme 20 entlang des Trägers 13 in Richtung des Doppelpfeils P verfahren werden kann.

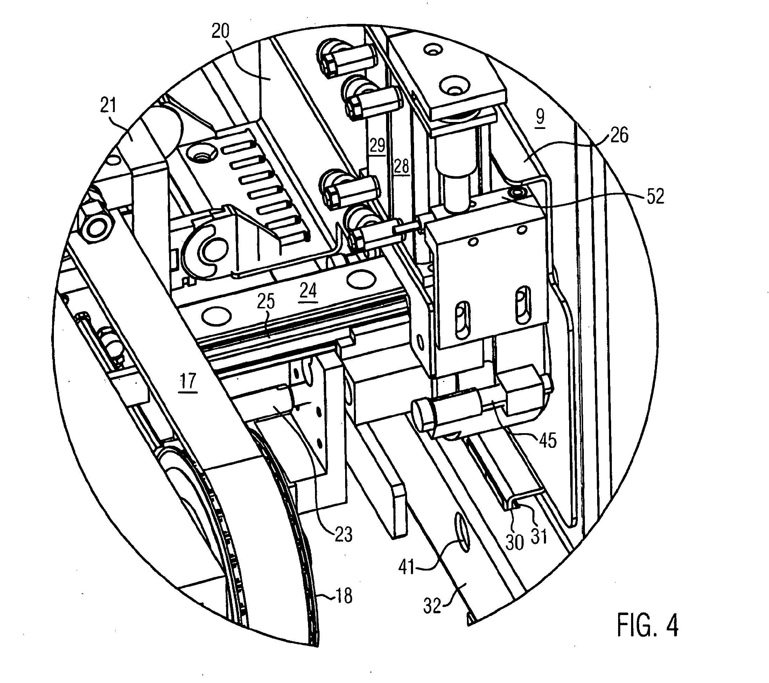

An der Aufnahme 20 sind näher noch anhand der Fig. 4 bis Fig. 9 der Zeichnung ersichtliche Betätigungseinrichtungen angeordnet.

Fig. 4 der Zeichnung zeigt die Zahnriemenscheibe 18, an der der Zahnriemen 17 umgelenkt wird. Bei der dargestellten Ausführungsform ist ein Klemmsitz 21 vorgesehen, der den Zahnriemen 17 derart klemmt, dass die Betätigung des Antriebsmotors 12 über die Zahnriemenscheibe 16 dazu führt, dass die Aufnahme 20 mit allen daran angeordneten Betätigungseinrichtungen in Richtung des Doppelpfeils P relativ zum Träger 13 bewegt werden kann.

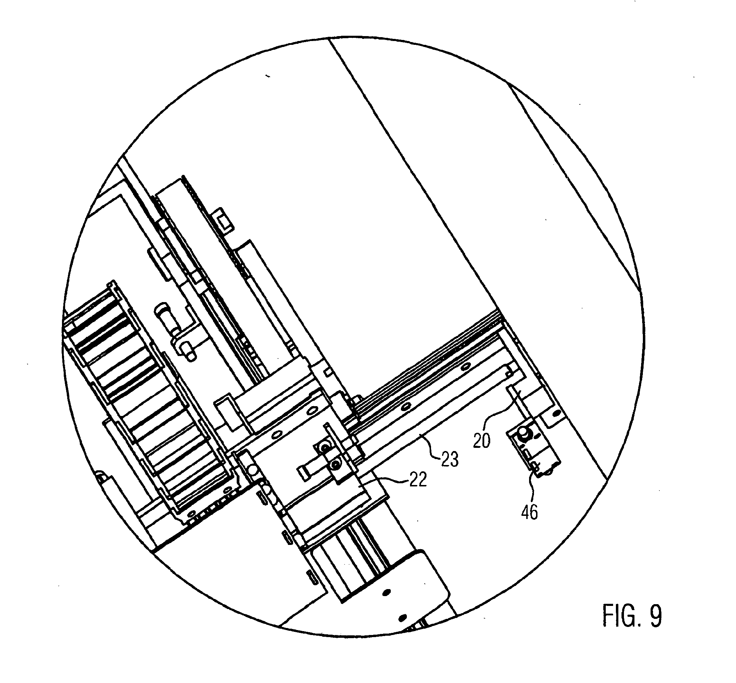

Die Betätigungseinrichtungen umfassen eine näher anhand von Fig. 9 ersichtliche Betätigungseinheit 22, bei der es sich um einen pneumatischen Stellzylinder oder Arbeitszylinder handelt, der doppelt wirkend ausgebildet ist und dessen Druckbeaufschlagung mit Druckluft zu einer entsprechenden Bewegung der Kolbenstange 23 führt und zwar so, dass die Aufnahme 20 in Richtung zu dem Tor 9, 10 heraus gefahren werden kann beziehungsweise bei einer entsprechenden Beaufschlagung des Arbeitszylinders 22 mit Druckluft in die andere Richtung die Aufnahme 20 in Richtung zu dem Träger 13 wieder eingefahren werden kann.

Der Arbeitszylinder 22 wird bei der Zustellbewegung der Aufnahme 20 in Richtung zum Tor 9, 10 hin solange mit Druckluft beaufschlagt, bis der Elektromagnet 27 in den Bereich nahe der Verriegelungseinrichtung 26 gelangt ist. Über einen näher anhand von Fig. 4 ersichtlichen Sensor 45 kann erkannt werden, ob sich der Elektromagnet 27 an der Verriegelungseinrichtung 26 angeordnet befindet, das heißt in einem vorbestimmten Abstand dazu oder bereits daran anliegt. Hierfür kann ein vom Sensor 45 abgegebenes Signal entsprechend ausgewertet werden und dann der Arbeitszylinder 22 drucklos geschaltet werden, sobald dieses Signal die gewünschte vorbestimmte Relativstellung zwischen dem Elektromagneten 27 und der Verriegelungseinrichtung 26 anzeigt. Auch kann das vom Sensor 45 ausgegebene Signal dazu verwendet werden, ein Abrutschen des Elektromagneten 27 von der Verriegelungseinrichtung 26 bei der Verfahrbewegung des Tores 9, 10 zu signalisieren.

Dadurch, dass der Arbeitszylinder 22 dann drucklos ist, wird erreicht dass der Arbeitszylinder 22 die Normalkraftkomponente zwischen dem Elektromagneten 27 und der Verriegelungseinrichtung 26 nicht beeinflusst und sich daher zwischen dem Elektromagneten 27 und der Verriegelungseinrichtung 26 eine definierte Reibkraft oder Haltekraft oder Haftkraft einstellt, die ausreichend ist, um über die Relativbewegung des Elektromagneten 27 in Richtung des Pfeils P nach Fig. 3 eine entsprechende Verlagerung der Tore 9, 10 zu erreichen, aber gleichzeitig so bemessen ist, dass der Elektromagnet 27 von der Verriegelungseinrichtung 26 abrutscht, wenn sich auf dem Verfahrweg der Tore 9, 10 ein Hindernis befindet.

Kommt das Tor 9, 10 auf seinem Verfahrweg von der offenen Stellung zur geschlossenen Stellung mit dem Hindernis in Kontakt und wird der Elektromagnet 27 durch eine entsprechende Betätigung des Antriebsmotors 12 weiter in Richtung zur vorgesehenen geschlossenen Stellung des Tores 9, 10 verfahren, so rutscht der Elektromagnet 27 von der Verriegelungseinrichtung 26, an der er während der Verfahroperationen des Tores 9, 10 anliegt, ab und eine Beschädigung des Hindernisses beziehungsweise eine Verletzung des Benutzers wird vermieden. Der Elektromagnet 27 liegt an der Verriegelungseinrichtung 26 mit einer über die Strom- und/oder Spannungszufuhr zum Elektromagneten 27 einstellbaren Normalkraft an.

An der Kontaktfläche zwischen Elektromagnet 27 und Verriegelungseinrichtung 26 liegen vorbestimmte oder auch veränderbare Reibkennzahlen vor. Über eine Einstellung der Strom- und/oder Spannungszufuhr zum Elektromagneten 27 kann sich verändernden Reibungsverhältnissen Rechnung getragen werden. Es bildet sich daher zwischen Elektromagnet 27 und der Verriegelungseinrichtung 26 eine vorbestimmbare Reibkraft aus, die so eingestellt wird, dass eine Verletzung des Benutzers oder eine Beschädigung des Hindernisses auf dem Verfahrweg des Tores 9, 10 sicher vermieden wird.

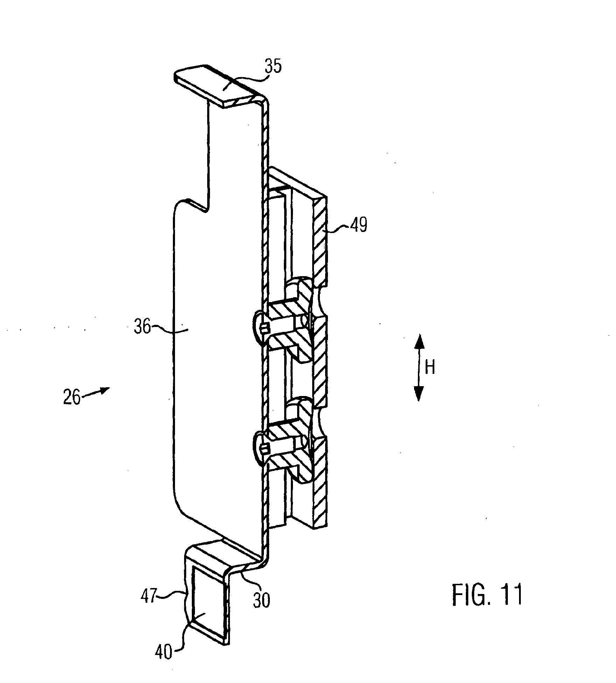

Über einen weiteren, in Fig. 4 der Zeichnung dargestellten Sensor 52 kann erfasst werden, ob die Verriegelungseinrichtung 26 ihre Verriegelungsstellung erreicht hat, wobei zu diesem Zweck vom Sensor 52 die Relativposition eines in Fig. 11 der Zeichnung dargestellten Schenkels 35 relativ zum Sensor 52 erfasst wird. Sendet der Sensor 52 ein entsprechendes Signal aus, dass sich der Schenkel 35 im Erfassungsbereich des Sensors 52 befindet, so kann dieses Signal zur Verifizierung verwendet werden, dass der Sperrriegel 30 der Verriegelungseinrichtung 26 seine Verriegelungsstellung in der Nut 31 eingenommen hat.

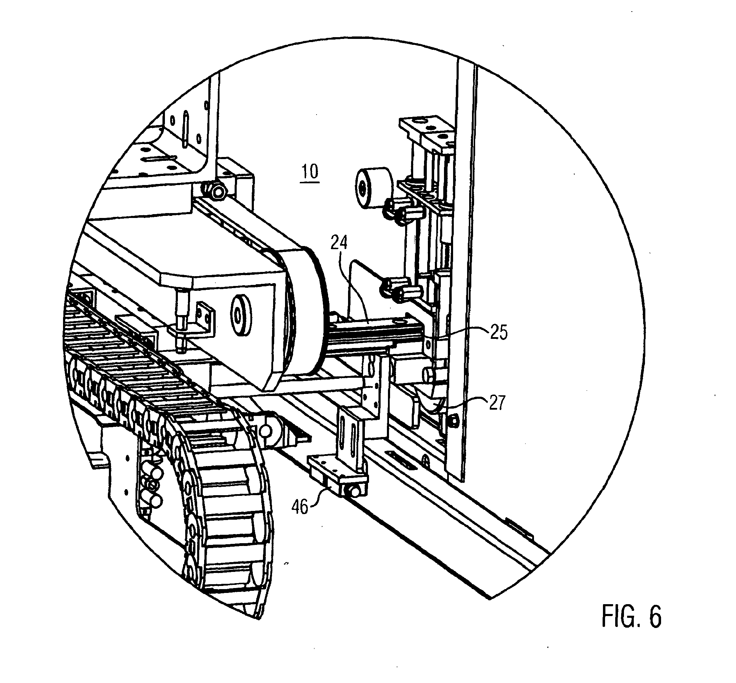

Die Aufnahme 20 ist an einem Träger 24 lösbar festgelegt, der, wie dies näher noch anhand von Fig. 6 der Zeichnung ersichtlich ist, mit Schwalbenschwanzführungen 25 versehen ist, die zusammen mit einer am Träger 13 angeordneten und nicht näher dargestellten Schwalbenschwanzaufnahme für eine exakte Führung und Bewegung der Aufnahme 20 sorgen.

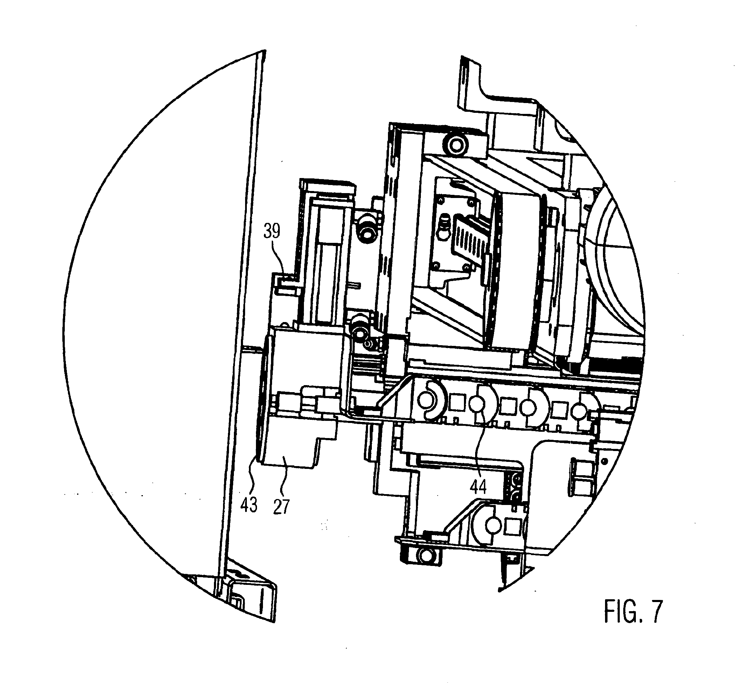

Weitere Elemente der Betätigungseinrichtungen an der Aufnahme 20 sind ein näher anhand von Fig. 7 ersichtlicher Elektromagnet 27 sowie ein erster Betätigungszylinder 28 und ein zweiter Betätigungszylinder 29. Bei den beiden Betätigungszylindern 28, 29 handelt es sich jeweils um pneumatische Arbeitszylinder, wobei der erste Betätigungszylinder 28 zum Öffnen beziehungsweise Entriegeln der Verriegelungseinrichtung 26 dient und der zweite Betätigungszylinder 29 zum Schließen beziehungsweise Verriegeln der Verriegelungseinrichtung 26 dient.

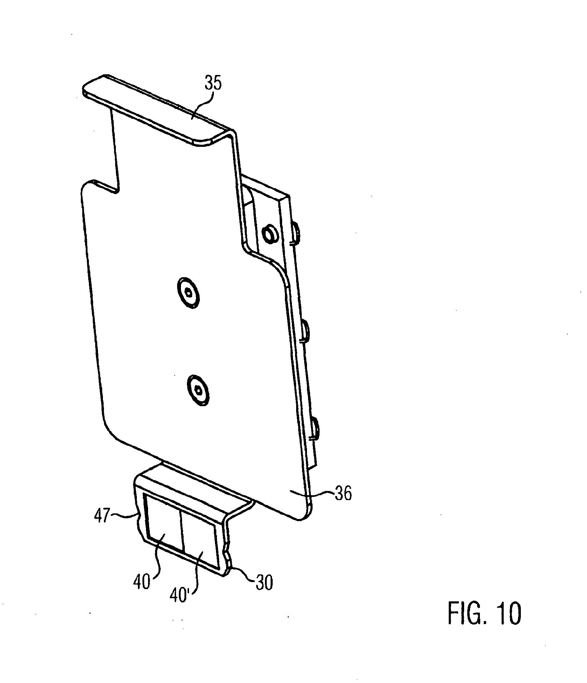

Fig. 4 der Zeichnung zeigt die Verriegelungseinrichtung 26 in ihrer verriegelten Stellung, das heißt, ein näher anhand von Fig. 10 der Zeichnung ersichtlicher Sperrriegel 30 der Verriegelungseinrichtung befindet sich im Eingriff mit einer Nut 31, die an einer Führungsschiene 32 für die Tore 9, 10 ausgebildet ist.

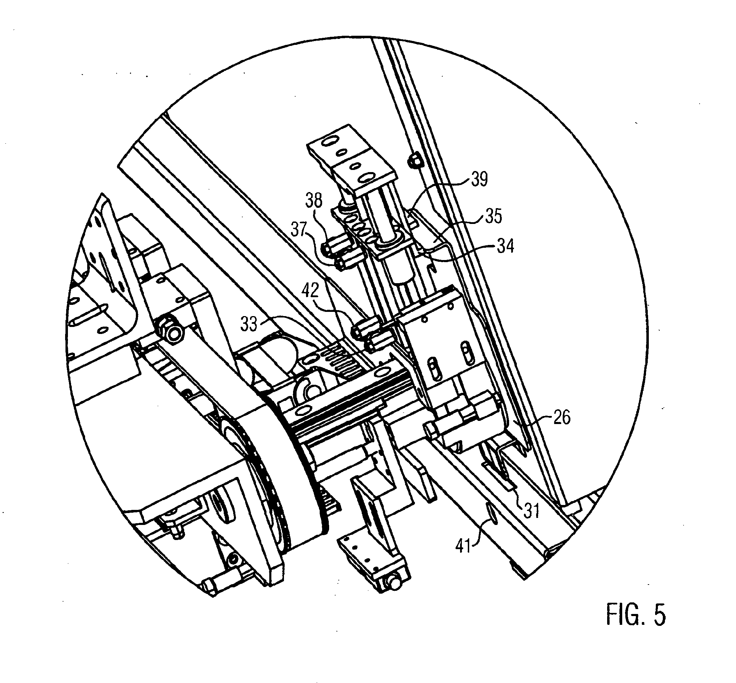

Durch eine Druckbeaufschlagung des Betätigungszylinders 28 kann die in Fig. 5 der Zeichnung gezeigte entriegelte Stellung der Verriegelungseinrichtung 26 herbeigeführt werden. Zu diesem Zweck wird der Betätigungszylinder 28 über einen Druckluftanschluss 33 mit Druckluft versorgt und nimmt die in Fig. 5 gezeigte ausgefahrene Stellung ein, wobei bei der Verfahrbewegung des Betätigungszylinders 28 von der in Fig. 4 gezeigten eingefahrenen Stellung zu der in Fig. 5 der Zeichnung gezeigten ausgefahrenen Stellung ein mit dem Betätigungszylinder 28 gekoppelter Winkel 34 mit einem Schenkel 35 der Verriegelungseinrichtung 26 in Eingriff kommt und die Verriegelungsplatte 36 zusammen mit dem daran angeordneten Sperrriegel 30 in Richtung nach oben bewegt und sich dabei der Sperrriegel 30 aus dem Eingriff mit der Nut 31 löst. Dies entspricht der entriegelten Stellung der Verriegelungseinrichtung 26.

Wenn die Verriegelungseinrichtung 26 aus der entriegelten Stellung nach Fig. 5 in die verriegelte Stellung nach Fig. 4 überführt werden soll, kann der erste Arbeitszylinder 28 über den Druckluftanschluss 37 entspannt werden und der zweite Betätigungszylinder oder Arbeitszylinder 29 über den Druckluftanschluss 38 mit Druckluft versorgt werden, was dazu führt, dass der in Fig. 5 und Fig. 7 gezeigte Winkel 39 mit dem Schenkel 35 der Verriegelungseinrichtung 26 in Kontakt kommt und die Verriegelungseinrichtung 26 aktiv in Richtung nach unten gerichtet beaufschlagt und so der Sperrriegel 30 in die Nut 31 der Führungsschiene 32 eingeführt wird. Vor der Betätigung des Arbeitszylinder 29 wird der Elektromagnet 27 stromlos geschaltet.

Damit gelangt auch die am Sperrriegel 30 vorgesehene Sensorfläche 40 in den Bereich direkt hinterhalb der Öffnung 41 und kann beispielsweise mittels einer Lichtschranke oder eines Lasers erfasst werden. An den beiden Betätigungszylindern 28, 29 können Rückmeldeeinrichtungen vorgesehen sein, die jeweils ein Signal auslösen, wenn die Betätigungszylinder ihre jeweilige Endposition in Betätigungsrichtung erreicht haben, es also beispielsweise der für die Verriegelung der Verriegelungseinrichtung 26 in der Nut 31 aktivierte zweite Betätigungszylinder 29 seine untere Endposition erreicht hat und aus diesem Signal abgeleitet werden kann, dass auch der Sperrriegel 30 seine Verriegelungsstellung in der Nut 31 erreicht hat.

Durch die Abtastung der Sensorfläche 40 kann dieses Signal verifiziert werden, indem beispielsweise ein Lichtstrahl auf die Sensorfläche 40 gerichtet wird und die verspiegelte Sensorfläche 40 diesen Lichtstrahl zu einer Empfangseinheit zurücksendet und auf diese Weise eine Verifizierung des von dem Betätigungszylinder 29 erhaltenen Signals stattfindet.

Hat der Sperrriegel 30 seine Verriegelungsstellung in der Nut 31 erreicht, kann der Betätigungszylinder 29 über den Druckluftanschluss 42 entspannt werden und die Aufnahme 20 mit allen daran angeordneten Betätigungseinrichtungen über eine Beaufschlagung des Arbeitszylinders 22 in Richtung zum Träger 13 hin zurück bewegt werden.

Fig. 6 der Zeichnung zeigt die entriegelte Stellung der Verriegelungseinrichtung 26 und den Elektromagneten 27, wie er am Tor 10 anliegt. Durch eine Bestromung des Elektromagneten 27 wird eine Haftkraft zwischen der Stirnfläche 43 des Elektromagneten 27 und dem Tor 10 beziehungsweise einem ferromagnetischen Teil des Tores 10 erreicht.

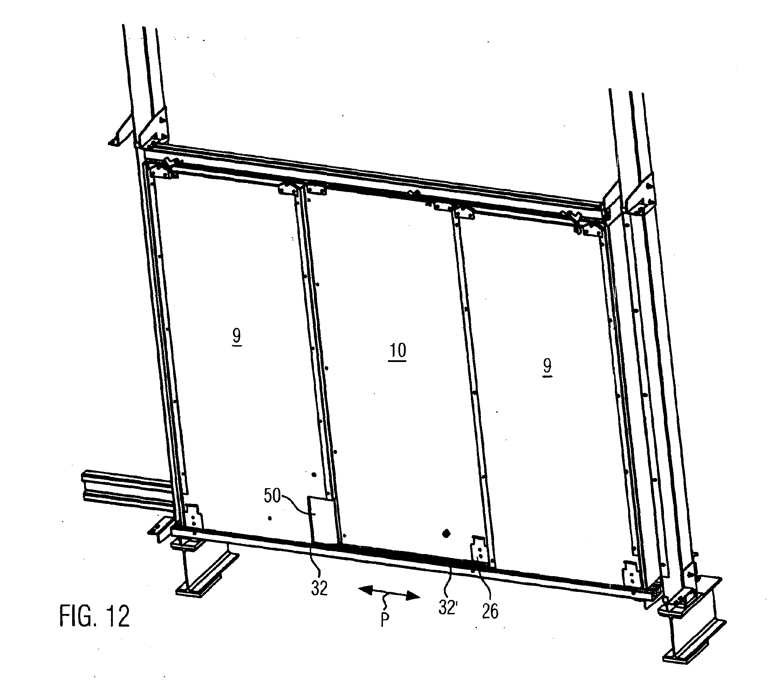

Die Stirnfläche 43 liegt also mit einer vorbestimmten Normalkraft an dem Tor 10 an. Durch eine Betätigung des Antriebsmotors 12 kann die Aufnahme 20 und damit auch der Elektromagnet 27 mit seiner Stirnfläche 43 in Richtung des Doppelpfeiles P nach Fig. 3 verfahren werden. Aufgrund der Bestromung des Elektromagneten 27 führt diese Verfahrbewegung auch zu einer entsprechenden Bewegung der Tore 9, 10 in Richtung des Doppelpfeils P nach Fig. 12. Auf diese Weise kann ein jeweiliger Regallagerplatz durch eine entsprechende Betätigung der Vorrichtung 11 geöffnet werden, so dass das Regalbediengerät 8 eine volle Palette mit Gütern in den zugehörigen Regallagerplatz befördern kann.

Über eine entsprechende Steuerung von Spannung und Stromstärke des zum Elektromagneten 27 geführten Stroms kann die Haftkraft zwischen der Stirnfläche 43 und dem Tor 9, 10 eingestellt werden. Befindet sich das Tor 9, 10 in einer geöffneten Stellung und soll vom Elektromagneten 27 mittels einer entsprechenden Betätigung des Antriebsmotors 12 in die Schließstellung verbracht werden, führt der Verfahrvorgang der Aufnahme 20 mittels des Antriebsmotors 12 dazu, dass das Tor 9, 10 in Richtung zur Schließstellung bewegt wird. Kommt es bei dieser Verfahrbewegung zu einer Kollision zwischen dem Tor 9, 10 und einem auf den Verfahrweg des Tores befindlichen Gegenstand, rutscht der Elektromagnet 27 vom Tor 9, 10 ab und eine Beschädigung des Gegenstands wird vermieden. Wenn es sich bei diesen Gegenstand beispielsweise um die Hand oder ein Bein eines Kommissionieres oder Benutzers handelt, der in unzulässiger Weise in den Spaltraum zwischen Regallager Platz und Lagergasse greift, wird er trotz dieser nicht zugelassenen Handlungsweise nicht verletzt.

Der Elektromagnet 27 muss mit elektrische Antriebsenergie versorgt werden und die Betätigungseinheit 22 sowie die beiden Betätigungszylinder 28, 29 müssen mit Druckluft versorgt werden, die Vorrichtung 11 weist also entsprechende Strom führende und Druckluft führende Versorgungsleitungen auf. Diese Versorgungsleitungen werden über die in Fig. 3 und Fig. 7 gezeigten Energieführungsketten in solchen Radien geführt, die eine Beschädigung bei der Umlenkung der Versorgungsleitungen vermeiden.

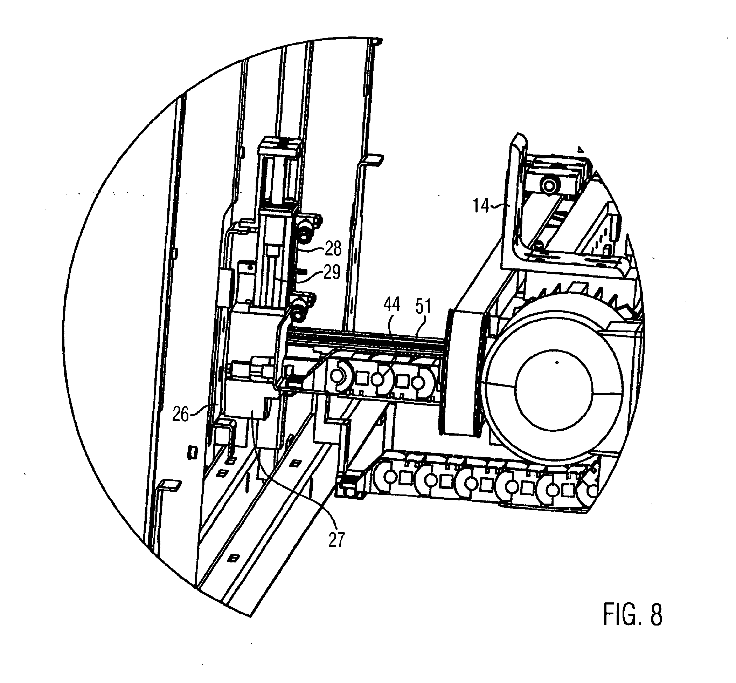

Fig. 8 zeigt eine entriegelte Stellung der Verriegelungseinrichtung 26 und die Position der Betätigungseinrichtungen in der Form des Elektromagneten 27 sowie der beiden Betätigungszylinder 28, 29. Die Versorgungsleitungen 51 für den Elektromagneten 27 und die beiden Betätigungszylinder 28, 29 sind an der Energieführungskette 44 angeordnet und werden damit zu den jeweiligen Betätigungseinrichtungen hin geführt.

Fig. 4 der Zeichnung zeigt eine Signalgebungseinrichtung in der Form eines so genannten Initiators, der zur Erkennung der metallischen Verriegelungseinrichtung 26 ausgebildet sind. Der Initiator 45 kann mit einem Signal auch die Betätigung der beiden Betätigungszylinder 28, 29 freigeben, es bedeutet dies mit anderen Worten, dass die beiden Betätigungszylinder erst dann mit Druckluft versorgt werden können, wenn mittels des Initiators festgestellt wurde, dass sich die Aufnahme 20 mit den beiden Betätigungszylindern im Bereich der Verriegelungseinrichtung 26 befinden, wodurch eine Fehlstellung der beiden Winkel 34, 39 relativ zu dem Schenkel 35 der Verriegelungseinrichtung 26 vermieden werden kann.

Ganz allgemein wird durch den Einsatz von zwei Betätigungszylindern 28, 29 eine vermieden, dass ein einzelner, mit beiden Winkel 34, 39 versehener Betätigungszylinder immer in einer Mittelstellung relativ zu dem Schenkel 35 gehalten werden muss, wozu eine entsprechende Dauerbeaufschlagung dieses einzelnen Betätigungszylinders erforderlich wäre.

Bei dem in Fig. 6 der Zeichnung gezeigten Bauteil 46 handelt es sich um eine Sender/Empfängereinheit, die zum Aussenden und Empfangen von Licht durch die Öffnung 41 hindurch ausgebildet ist, um die Sensorfläche 30 der Verriegelungseinrichtung 26 detektiert zu können. Die Sender/Empfängereinheit 46 sendet Licht durch die Öffnung 41 hindurch und kann über einen Empfang des ausgesandten und an der Sensorfläche 40 reflektierten Lichts zur Erkennung verwendet werden, dass sich der Sperrriegel 30 in der Verriegelungsstellung in der Nut 31 befindet.

Der Sperrriegel 30 weist eine Einbuchtung 47 auf, die mit einer Fläche 48 der Nut oder Ausnehmung 31 in Kontakt kommt, sollte beispielsweise aufgrund von Erschütterungen oder Vibrationen, die von einer Bewegung des schweren Regalbediengeräts 8 ausgehen können, der Fall auftreten, dass die Verriegelungseinrichtung 26 geringfügig in Richtung nach oben verlagert wird, also eine Bewegung des Sperrriegels 30 aus der Nut 31 heraus stattfindet. Obwohl eine solche unbeabsichtigte Bewegung des Sperrriegels 30 ausgesprochen unwahrscheinlich ist, verhakt sich die Einbuchtung 47 in einem solchen Fall an der Fläche 48 der Ausnehmung 31, so dass ein weiteres Aufsteigen des Sperrriegels 30 relativ zur Ausnehmung oder Nut 31 vermieden wird.

Die in Fig. 10 der Zeichnung dargestellte Verriegelungseinrichtung 26 weist zwei benachbarte Sensorflächen 40, 40' auf, wobei die linke Sensorfläche 40 zur Erfassung der Verriegelungsstellung der Verriegelungseinrichtung 26 am mittleren Tor 10 dient, während die rechte Sensorfläche 40' zur Erfassung der Verriegelungsstellung des in Fig. 12 der Zeichnung gezeigten rechten Tores 9 dient.

Wird nämlich das rechte Tor 9 in seine geöffnete Position verfahren, also nach links bewegt, so befindet es sich in der geöffneten Stellung unmittelbar vor dem mittleren Tor 10 angeordnet und die Verriegelungsstellung des mittleren Tores 10 könnte nicht mehr detektiert werden, da sich der Sperrriegel 30 der Verriegelungseinrichtung 26 des rechten Tores 9 in der geöffneten Stellung unmittelbar vor dem Sperrriegel 30 des mittleren Tores 10 befindet.

Durch die Ausbildung des Sperrriegels 30 mit zwei Sensorflächen 40, 40' und eine entsprechende Verschiebung der dem mittleren Tor 10 zugewandten Öffnung 41 in der Zeichnungsebene nach links kann die Verriegelungsposition des mittleren Tores 10 durch eine entsprechende Abtastung der linken Sensorfläche 40 der Verriegelungseinrichtung 26 am Tor 10 detektiert werden. Durch die gleichzeitige Auswertung der Verfahrposition des Regalbediengeräts 8 und der Erfassung der Sensorflächen 40, 40' kann zwischen einem geschlossenen mittleren Tor 10 und einem geöffneten rechten Tor 9 unterschieden werden.

Fig. 11 der Zeichnung zeigt eine Schnittdarstellung der Verriegelungseinrichtung 26 mit einem Halteblech 49, mit der die Verriegelungseinrichtung 26 an dem jeweiligen Tor 9, 10 beispielsweise mittels einer Schraubverbindung festgelegt werden kann. Die Verriegelungsplatte 36 ist relativ zum Halteblech 49 in Richtung des Pfeils H verschiebbar angeordnet, so dass die Verriegelungsplatte 36 mit dem Sperrriegel 30 über die Betätigungszylinder 28, 29 in Richtung des Doppelpfeils H verschoben werden kann, um dafür zu sorgen, dass der Sperrriegel 30 aus seiner Eingriffsstellung mit der Nut 31 gelöst wird beziehungsweise in die Eingriffsstellung verbracht werden kann.

Fig. 12 zeigt, dass am Tor 9 eine Ausnehmung 50 vorgesehen ist, damit die am mittleren Tor 10 vorgesehene Verriegelungseinrichtung 26 bei der geöffneten Stellung des Tores 10, in der es sich nach links verschoben befindet, in der Ausnehmung 50 aufgenommen werden kann, ohne dass es zu einer Kollision zwischen dem an der der Verriegelungseinrichtung 26 des Tores 10 anliegenden Elektromagneten 27 und dem linken Tor 9 kommt. Wie es darüber hinaus ersichtlich ist, ist das mittlere Tor 10 in der Zeichnungsebene in Richtung nach hinten versetzt, die beiden Tore 9 laufen also in einer Führungsschiene 32 und das mittlere Tor 10 läuft in einer parallel zu der Führungsschiene 32 angeordneten zweiten Führungsschiene 32'. Die Ausnehmung 50 ist benutzerseitig mit einer nicht näher dargestellten Klappe verschlossen, die vom Benutzer nicht geöffnet werden kann, sondern von einer am Tor 10 angeordneten Einrichtung betätigt wird.

Hinsichtlich vorstehend im einzelnen nicht näher erläuterter Merkmale der Erfindung wird in übrigen ausdrücklich auf die Patentansprüche und die Zeichnung verwiesen.

### Bezugszeichenliste

- 1: Regallager
- 2: Lagerregal
- 2': Lagerregal
- 3: Lagergasse
- 4: Regalbediengerätemast
- 5: Hubschlitten
- 6: Lagergasse
- 7: Kommissioniergasse
- 8: Regalbediengerät
- 9: Tor
- 10: Tor
- 11: Vorrichtung
- 11': Einrichtung
- 12: Antriebsmotor
- 13: Träger
- 14: Aufnahme
- 15: Winkelgetriebe
- 16: Zahnriemenscheibe
- 17: Zahnriemen
- 18: Zahnriemenscheibe
- 19: oberes Zugtrumm
- 20: Aufnahme
- 21: Klemmsitz
- 22: Betätigungseinheit, Arbeitszylinder
- 23: Kolbenstange
- 24: Träger
- 25: Schwalbenschwanzführung
- 26: Verriegelungseinrichtung
- 27: Elektromagnet
- 28: Betätigungszylinder
- 29: Betätigungszylinder
- 30: Sperrriegel
- 31: Nut
- 32: Führungsschiene
- 32': Führungsschiene
- 33: Druckluftanschluss
- 34: Winkel
- 35: Schenkel
- 36: Verriegelungsplatte
- 37: Druckluftanschluss
- 38: Druckluftanschluss
- 39: Winkel
- 40: Sensorfläche
- 40': Sensorfläche
- 41: Öffnung
- 42: Druckluftanschluss
- 43: Stirnfläche
- 44: Energieführungskette
- 45: Signalgebungseinrichtung
- 46: Sender/Empfangseinheit
- 47: Einbuchtung
- 48: Fläche
- 49: Halteblech
- 50: Ausnehmung
- 51: Versorgungsleitungen
- 52: Sensor

- P: Doppelpfeil
- H: Doppelpfeil

## Patentansprüche

1. Regallager mit einer Vielzahl von Lagerregalen (2, 2') und einem in einer Lagergasse (3, 6) verfahrbaren Regalfahrzeug (5, 8),
wobei zumindest einzelne Lagerregale (2, 2') ein Tor (9, 10) besitzen, an dem eine Verriegelungseinrichtung (26) zur Verriegelung des Tores gegen unbeabsichtigtes Öffnen des Tores (9, 10) vorgesehen ist,
und das Regalfahrzeug (5, 8) eine Vorrichtung (11) zum Öffnen und/oder Schließen des Tores (9, 10) unabhängig von einem benachbarten Tor (9, 10) aufweist,
und die Vorrichtung (11) eine Einrichtung (11') zur Beaufschlagung der Verriegelungseinrichtung (26) zur Verriegelung und Entriegelung des Tores (9, 10) besitzt,
und die Vorrichtung (11) einen Antriebsmotor (12) aufweist, mit welchem die Einrichtung (11') in den Bereich der Verriegelungseinrichtung (26) des Tores (9, 10) relativ zum Tor (9, 10) verfahrbar ist,
**dadurch gekennzeichnet, dass** die Einrichtung (11') einen an einer Aufnahme (20) angeordneten elektrisch betätigbaren Magneten (27) besitzt, der zur Ausbildung von zu einer Verlagerung des Tores (9, 10) mittels einer Relativbewegung des Magneten (27) ausreichenden Reibkraft zwischen dem Magneten (27) und einem am Tor (9, 10) angeordneten ferromagnetischen Abschnitt ausgebildet ist und der Magnet (27) mittels des Antriebsmotors (12) zum Öffnen und Schließen des Tores (9, 10) zusammen mit dem Tor (9, 10) verfahrbar ist.

2. Regallager nach Anspruch 1, **gekennzeichnet durch** eine mittels des Antriebsmotors (12) verfahrbare Betätigungseinheit (22), mit der die Einrichtung (11') mit der Verriegelungseinrichtung (26) zu deren Entriegelung und/oder Verriegelung in Kontakt bringbar ist.

3. Regallager nach Anspruch 1 oder 2, **dadurch gekennzeichnet, dass** die Einrichtung (11') mindestens einen Betätigungszylinder (28) aufweist, der die Verriegelungseinrichtung (26) in eine entriegelte Stellung betätigt und der Betätigungszylinder (28) mittels des Antriebsmotors (12) relativ zur Verriegelungseinrichtung (26) verfahrbar ist.

4. Regallager nach einem der vorstehenden Ansprüche, **dadurch gekennzeichnet, dass** die Einrichtung (11') mindestens einen Betätigungszylinder (29) aufweist, der die Verriegelungseinrichtung (26) in eine verriegelte Stellung betätigt und die Stellung der Verriegelungseinrichtung (26) sensorisch überprüfbar ist.

5. Regallager nach einem der vorstehenden Ansprüche, **dadurch gekennzeichnet, dass** die Verriegelungseinrichtung (26) relativ zum Tor (9, 10) weitgehend vertikal verlagerbar angeordnet ist und einen Sperrriegel (30) aufweist, der mit einer detektierbaren Sensorfläche (40, 40') versehen ist.

6. Regallager nach einem der vorstehenden Ansprüche, **dadurch gekennzeichnet, dass** die Verriegelungseinrichtung (26) einen Sperrriegel (30) aufweist, der mit einer Ausnehmung (31) einer das Tor (9, 10) führenden Führungsschiene (32) in Eingriff bringbar ist und eine Einbuchtung (47) aufweist, die mit einer Fläche (48) der Ausnehmung (31) zusammenwirkt derart, dass ein unbeabsichtigtes Lösen des Sperrriegels (30) von der Ausnehmung (31) vermieden ist.

7. Regallager nach einem der vorstehenden Ansprüche, **gekennzeichnet durch** eine Leitungsführungseinrichtung (44), mittels der elektrische und fluidführende Leitungen (51) zu an der Einrichtung (11') vorgesehenen Betätigungsmitteln (27; 28; 29) geführt sind.

8. Regallager nach einem der ansprüche 2 bis 7, **dadurch gekennzeichnet, dass** die Betätigungseinheit (22) an der mittels des Antriebsmotors (12) relativ zum Regalfahrzeug (5, 8) verlagerbaren Aufnahme (20) angeordnet ist und mittels eines Riementriebs relativ zum Regalfahrzeug (5, 8) verlagerbar ist.

9. Regallager nach einem der vorstehenden Ansprüche, **gekennzeichnet durch** zwei beabstandete und parallel verlaufende Führungsschienen (32, 32') am Lagerregal (2, 2') zur Führung und alternierenden Aufnahme der Tore (9, 10).

10. Regallager nach einem der vorstehenden Ansprüche, **dadurch gekennzeichnet, dass** das Tor (9, 10) an seinem einer Führungsschiene (32, 32') zugewandten Bereich mit einer Ausnehmung (50) zur Aufnahme der Verriegelungseinrichtung (26) versehen ist derart, dass die Verriegelungseinrichtung (26) bei einem vor dem Tor (10) im Abstand dazu verlagerten anderen Tor (9) in der Ausnehmung (50) aufgenommen ist.

## Claims

1. A high-bay racking facility with a multiplicity of storage racks (2, 2') and a storage and retrieval vehicle (5, 8) that can traverse a rack aisle (3, 6), wherein
at least individual storage racks ,(2, 2') possess a gate (9, 10), on which a locking facility (26) is provided for purposes of locking the gate against inadvertent opening of the gate (9, 10),
and the storage and retrieval vehicle (5, 8) has a device (11) for purposes of opening and/or closing the gate (9, 10), independently of an adjacent gate (9, 10),
and the device (11) possesses equipment (11') for applying a load onto the locking facility (26), for purposes of locking and unlocking the gate (9, 10),
and the device (11) has a drive motor (12), with which the equipment (11') can be moved relative to the gate (9, 10) into the vicinity of the locking facility (26) of the gate (9, 10),
**characterised in that**,
the equipment (11') possesses a magnet (27) that can be electrically actuated, arranged on a seating (20), which magnet is designed for purposes of forming a frictional force between the magnet (27) and a ferromagnetic section arranged on the gate (9, 10) that is sufficient to displace the gate (9, 10) by means of a relative movement of the magnet (27), and the magnet (27) can be moved together with the gate (9, 10) by means of the drive motor (12) for purposes of opening and closing the gate (9, 10).

2. The high-bay racking facility in accordance with Claim 1,
**characterised by**
an actuation unit (22) that can be moved by means of the drive motor (12), with which the equipment (11') can be brought into contact with the locking facility (26) for purposes of unlocking and/or locking the latter.

3. The high-bay racking facility in accordance with Claim 1 or 2,
**characterised in that**,
the equipment (11') has at least one actuation ram (28), which actuates the locking facility (26) into an unlocked position, and the actuation ram (28) can be moved by means of the drive motor (12) relative to the locking facility (26).

4. The high-bay racking facility in accordance with one of the preceding claims,
**characterised in that**,
the equipment (11') has at least one actuation ram (29), which actuates the locking facility (26) into a locked position, and the position of the locking facility (26) can be checked by means of sensors.

5. The high-bay racking facility in accordance with one of the preceding claims,
**characterised in that**,
the locking facility (26) is arranged relative to the gate (9, 10) such that to a large extent it can be displaced vertically, and has a locking bolt (30), which is provided with a sensor surface (40, 40') that can be detected.

6. The high-bay racking facility in accordance with one of the preceding claims,
**characterised in that**,
the locking facility (26) has a locking bolt (30), which can be brought into engagement with a recess (31) of a guide rail (32) that is guiding the gate (9, 10), and has an indentation (47) that interacts with a surface (48) of the recess (31) such that an inadvertent release of the locking bolt (30) from the recess (31) is prevented.

7. The high-bay racking facility in accordance with one of the preceding claims,
**characterised by**
a conduit facility (44) by means of which electrical and fluid lines (51) are guided to actuation means (27, 28, 29) provided on the equipment (11').

8. The high-bay racking facility in accordance with one of the Claims 2 to 7,
**characterised in that**,
the actuation unit (22) is arranged on the seating (20) that can be moved by means of the drive motor (12) relative to the storage and retrieval vehicle (5, 8), and can be moved by means of a belt drive relative to the storage and retrieval vehicle (5, 8).

9. The high-bay racking facility in accordance with one of the preceding claims,
**characterised by**
two guide rails (32, 32') on the storage racks (2, 2'), spaced apart and running parallel to each other, to provide guidance and alternate seating of the gates (9, 10).

10. The high-bay racking facility in accordance with one of the preceding claims,
**characterised in that**,
in its region facing towards a guide rail (32, 32') the gate (9, 10) is provided with a recess (50) for purposes of accommodating the locking facility (26), such that in the event of another gate (9) being displaced in front of the gate (10) at a spacing from the latter the locking facility (26) is accommodated in the recess (50).

## Revendications

1. Rayonnage comportant une pluralité d'étagères de stockage (2,2') et un véhicule de stockage et déstockage (5,8) déplaçable dans un couloir d'entrepôt (3,6),
dans lequel au moins des étagères de stockage individuelles (2,2') possèdent une porte (9,10), sur laquelle un dispositif de verrouillage (26) pour verrouiller la porte contre une ouverture inintentionnelle de la porte (9,10) est prévu,
et le véhicule de stockage et déstockage (5,8) présente un dispositif (11) pour ouvrir et/ou fermer la porte (9,10) indépendamment d'une porte voisine (9,10),
et le dispositif (11) présente un moteur d'entraînement (12), avec lequel le dispositif (11') est déplaçable dans la zone du dispositif de verrouillage (26) de la porte (9,10) relativement à la porte (9,10),
**caractérisé en ce que** le dispositif (11') possède un aimant (27) actionnable électriquement disposé sur un réceptacle (20), qui est conçu afin de produire une force de friction suffisante entre l'aimant (27) et une portion ferromagnétique disposée sur une porte (9,10) en vue d'un déplacement de la porte (9,10) au moyen d'un mouvement relatif de l'aimant (27) et l'aimant (27) est déplaçable au moyen du moteur d'entraînement (12) afin d'ouvrir et fermer la porte (9,10) conjointement à la porte (9,10).

2. Rayonnage selon la revendication 1, **caractérisé par** une unité d'actionnement (22) déplaçable au moyen du moteur d'entraînement (12), avec laquelle le dispositif (11') peut être amené en contact avec le dispositif de verrouillage (26) en vue de son verrouillage et/ou déverrouillage.

3. Rayonnage selon les revendications 1 ou 2, **caractérisé en ce que** le dispositif (11') présente au moins un vérin d'actionnement (28), qui actionne le dispositif de verrouillage (26) dans une position déverrouillée et le vérin d'actionnement (28) est déplaçable au moyen du moteur d'entraînement (12) relativement au dispositif de verrouillage (26).

4. Rayonnage selon une des revendications précédentes, **caractérisé en ce que** le dispositif (11') présente au moins un vérin d'actionnement (29), qui actionne le dispositif de verrouillage (26) dans une position verrouillée et la position du dispositif de verrouillage (26) peut être contrôlée par des capteurs.

5. Rayonnage selon une des revendications précédentes, **caractérisé en ce que** le dispositif de verrouillage (26) est disposé de manière déplaçable essentiellement verticalement par rapport à la porte (9,10) et présente un verrou de blocage (30), qui est pourvu d'une surface de capteur (40,40') détectable.

6. Rayonnage selon une des revendications précédentes, **caractérisé en ce que** le dispositif de verrouillage (26) présente un verrou de blocage (30), qui peut être amené en prise avec un évidement (31) d'un rail de guidage (32) menant à la porte (9,10) et présente un renfoncement (47), qui coopère avec une surface (48) de l'évidement (31) de telle sorte qu'un relâchement inintentionnel du verrou de blocage (30) hors de l'évidement (31) soit évité.

7. Rayonnage selon une des revendications précédentes, **caractérisé par** un dispositif de guidage de ligne (44), au moyen duquel des lignes (51) électriques et fluidiques sont guidées vers des moyens d'actionnement (2728 ;29) prévues sur le dispositif (11').

8. Rayonnage selon une des revendications 2 à 7, **caractérisé en ce que** l'unité d'actionnement (22) est disposée sur le réceptacle (20) déplaçable au moyen du moteur d'entraînement (12) relativement au véhicule de stockage et déstockage (5,8) et est déplaçable au moyen d'une transmission à courroie relativement au véhicule de stockage et déstockage (5,8).

9. Rayonnage selon une des revendications précédentes, **caractérisé par** deux rails de guidage (32,32') espacés et s'étendant en parallèle sur l'étagère de stockage (2,2') pour guider et recevoir en alternance la porte (9,10).

10. Rayonnage selon une des revendications précédentes, **caractérisé en ce que** la porte (9,10) sur sa zone tournée vers un rail de guidage (32,32') est pourvue d'un évidement (50) afin de recevoir le dispositif de verrouillage (26), de telle sorte que le dispositif de verrouillage (26) soit reçu dans l'évidement (50) sur une autre porte (9) devant la porte (10), déplacée en espacement par rapport à cette dernière.
